# EUROPÄISCHE PATENTSCHRIFT

(11) **EP 1 773 613 B1**
(45) Veröffentlichungstag und Bekanntmachung des Hinweises auf die Patenterteilung: **25.04.2012**
(21) Anmeldenummer: 05762831.5
(22) Anmeldetag: 21.07.2005

(54) **FAHRZEUGFÜHRUNGSSYSTEM MIT ZENTRALEM STEUERGERÄT FÜR SÄMTLICHE FAHRZEUGFÜHRUNGSFUNKTIONEN**
VEHICLE CONTROL SYSTEM COMPRISING A CENTRAL CONTROL DEVICE FOR ALL VEHICLE CONTROL FUNCTIONS
SYSTEME DE GESTION DE VEHICULE COMPRENANT UN APPAREIL DE COMMANDE CENTRAL POUR TOUTES LES FONCTIONS DE GESTION DU VEHICULE

(30) Priorität: 22.07.2004 DE 102004035674; 08.07.2005 DE 102005032056
(43) Veröffentlichungstag der Anmeldung: 18.04.2007
(73) Patentinhaber: KNORR-BREMSE Systeme für Nutzfahrzeuge GmbH, 80809 München (DE)
(72) Erfinder: HECKER, Falk, 71706 Markgröningen (DE); GÜCKER, Ulrich, 71701 Schwieberdingen (DE)
(74) Vertreter: Schönmann, Kurt
(86) Internationale Anmeldenummer: PCT/EP2005/007942
(87) Internationale Veröffentlichungsnummer: WO 2006/008156

(56) Entgegenhaltungen:
- EP-A- 1 182 558
- DE-A1- 10 229 676
- FR-A- 2 786 739
- US-A1- 2003 047 362

## Beschreibung

### Stand der Technik

Die Erfindung betrifft ein Nutzfahrzeug beinhaltend mehrere elektrisch ansteuerbare Stelleinrichtungen, welche zum Ausführen von einer oder mehrerer Fahrzeugführungsfunktionen vorgesehen sind, gemäß dem Oberbegriff von Anspruch 1.

Unter dem Begriff Fahrzeugführungsfunktion sollen im folgenden alle Funktionen verstanden werden, welche die Längsdynamik oder die Querdynamik eines Fahrzeugs beeinflussen können, wie beispielsweise die Bremsfunktion, die Antriebsfunktion oder die Getriebeschaltfunktionen.

Heutzutage werden viele ursprünglich rein mechanische, hydraulische oder pneumatische Stelleinrichtungen im Fahrzeug durch elektro-mechanische, elektro-hydraulische oder elektro-pneumatische Stelleinrichtungen ersetzt, wie beispielsweise rein pneumatische Bremseinrichtungen in Nutzfahrzeugen durch elektro-pneumatische Bremseinrichtungen oder durch elektronisch geregelte Bremssysteme (EBS). Diese elektrischen Stelleinrichtungen stehen in der Regel durch Busverbindungen mit den zugeordneten Steuergeräten in Verbindung, wobei üblicherweise für jede Fahrzeugführungsfunktion ein separates Steuergerät vorgesehen ist. Dies bedingt angesichts einer steigenden Anzahl von elektrischen Stelleinrichtungen und steigender Funktionalität eine hohe Anzahl von Steuergeräten mit einem entsprechend hohen Integrations- und Verkabelungsaufwand.

Die gattungsbildende US 2003/0047362 A1 offenbart ein Fahrzeugchassis, an welchem ein zentrales Steuergerät für sämtliche Stelleinrichtungen des Fahrzeugs wie eine elektrische Bremse, eine elektrische Steuereinrichtung oder für eine Federungseinrichtung angeordnet ist. Das zentrale Steuergerät steht über elektrische Kabel mit Sensoren in Verbindung, welche die Betätigungsbewegungen von Betätigungselementen wie beispielsweise einem Lenkrad oder von Pedalen aufnehmen, um sie als entsprechende Sollwerte für den Lenkwinkel, die Gaspedalstellung, die Bremsbetätigung etc. an das zentrale Steuergerät zu melden. In dieser Schrift wird zwar ausgeführt, dass es sich bei dem zentralen Steuergerät um einen Computer handelt, jedoch nicht, auf welche Weise dieser strukturiert sein soll, um die Fahrzeugführungsfunktionen ausführen zu können. Die EP 1 182 558 A1 offenbart einen Mikrocontroller mit einer Memory-Management-Unit (MMU).

Demgegenüber ist es die Aufgabe der vorliegenden Erfindung, ein Nutzfahrzeug der eingangs erwähnten Art derart weiter zu entwickeln, dass eine sichere und effiziente Steuerung der Fahrzeugführungsfunktionen durch das Fahrzeugführungssteuergerät möglich ist.

Diese Aufgabe wird durch die Merkmale von Anspruch 1 gelöst.

### Offenbarung der Erfindung

In dem vorgeschlagen wird, dass wenigstens einige der Fahrzeugführungsfunktionen ausführenden Stelleinrichtungen von einem zentralen Fahrzeugführungssteuergerät angesteuert sind, welches einen Mikrocontroller mit einer Memory-Management-Unit (MMU) zum Zuweisen von virtuellen Speicherbereichen zu Software-Programmen umfasst, wobei jedes Software-Programm einer Fahrzeugführungsfunktion zugeordnet ist, sind zum einen keine weiteren Steuergeräte mehr notwendig, wodurch der Verkabelungs- und Integrationsaufwand merklich sinkt. Weiterhin bietet das zentrale Steuergerät die Möglichkeit, unterschiedliche und verschiedenen Fahrzeugführungsfunktionen zugeordnete Softwareprogramme unabhängig voneinander zu entwickeln, zu speichern und auf diese separat zugreifen zu können. Dann herrscht auch Flexibilität hinsichtlich der Anzahl der gespeicherten Softwareprogramme, da jederzeit neue Programme hinzukommen, alte Programme gelöscht bzw. Updates angefertigt werden können.

Bei entsprechender Auslegung des zentralen Fahrzeugführungssteuergeräts kann somit homologationsrelevante neben nicht sicherheitskritischer Software gleichzeitig und unabhängig voneinander laufen. Zugleich wird die Kommunikation erheblich effektiver, da die Schnittstellen zu den Stelleinrichtungen gegenüber dem Stand der Technik vereinfacht werden können und die Kommunikation der Systeme untereinander auf übergeordneter Ebene innerhalb des zentralen Fahrzeugführungssteuergeräts abläuft.

Durch die in den Unteransprüchen aufgeführten Maßnahmen sind vorteilhafte Weiterbildungen und Verbesserungen der in Anspruch 1 angegebenen Erfindung möglich. Besonders bevorzugt ist die Memory-Management-Unit ausgebildet, um Zugriffsrechte in Bezug zu den virtuellen Speicherbereichen zu vergeben. Diese Zugriffsrechte können beispielsweise in nur lesend, lesend und schreibend, oder kein Zugriff bestehen. Fehlzugriffe können dann von der Memory-Management-Unit erkannt, verhindert und an das Betriebssystem gemeldet werden.

Eine solche Fahrzeugführungsfunktion ist bevorzugt eine oder mehrere aus der folgenden Gruppe von Fahrzeugführungsfunktionen:
- Aussteuerung eines Motormomentanforderungssignals in Abhängigkeit eines Signals für die Gaspedalstellung,
- Aussteuerung von rad-und/oder achsindividuellen Bremskraftanforderungssignalen für Dauerbremse, Motorbremse oder Betriebsbremse in Abhängigkeit eines Signals für die Bremspedalstellung;
- Aussteuerung von Schaltsignalen für ein automatisches Getriebe,
- Aussteuerung von Signalen betreffend die Fahrstabilität und Fahrdynamik,
- Aussteuerung von Signalen betreffend ein elektrisch steuerbares Fahrwerk in Abhängigkeit von Eingangsdaten.

Die Signale betreffend die Fahrstabilität und Fahrdynamik umfassen bevorzugt Signale für ein elektronisches Stabilitätsprogramm (ESP) und/oder Signale für ein Antiblockiersystem (ABS). Zusätzlich kann eine solche Fahrzeugführungsfunktion in der Aussteuerung von Bremskraftanforderungssignalen für eine elektrische Parkbremse in Abhängigkeit von der Stellung eines Parkbremsbetätigungsorgans und/oder in der Aussteuerung von Signalen betreffend eine elektrische Lenkeinrichtung (drive by wire) in Abhängigkeit eines Signals für die Lenkradstellung bestehen.

### Zeichnungen

Ein Ausführungsbeispiel der Erfindung ist in der Zeichnung dargestellt und in der nachfolgenden Beschreibung näher erläutert. In der Zeichnung zeigt die einzige Figur eine schematische Darstellung einer Steuerungseinrichtung zum Steuern von Fahrzeugführungsfunktionen eines Nutzfahrzeugs gemäß einer bevorzugten Ausführungsform der Erfindung;

### Beschreibung des Ausführungsbeispiels

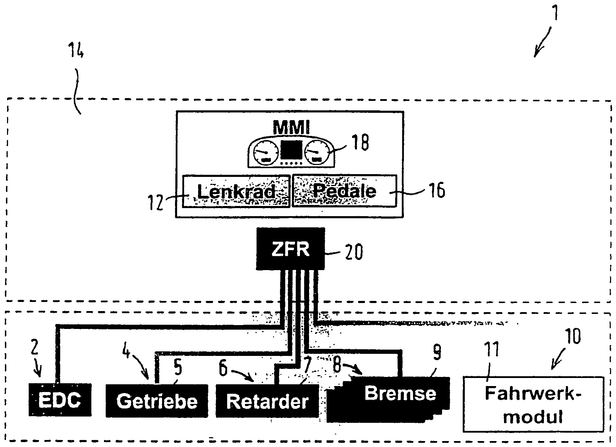

Die in Fig.1 gezeigte Steuerungseinrichtung 1 eines Nutzfahrzeugs beinhaltet mehrere elektrisch ansteuerbare Stelleinrichtungen 2, 4, 6, 8, 10, welche zum Ausführen von Fahrzeugführungsfunktionen vorgesehen sind. Bevorzugt sind die folgenden Stelleinrichtungen vorhanden :
- eine elektrische Stelleinrichtung 2, welche eine Brennkraftmaschine des Fahrzeugs betätigt, um das von ihr abgegebene Motormoment bzw. die von ihr abgegebene Motorleistung zu steuern,
- eine elektrische Stelleinrichtung 4, welche ein automatisches Getriebe 5 des Nutzfahrzeugs betätigt, um eine Schaltfolge bzw. eine Schaltstrategie zu steuern,
- eine elektrische Stelleinrichtung 6, welche einen Retarder 7 des Nutzfahrzeugs betätigt, um Dauerbremsungen einzuleiten,
- eine elektrische Stelleinrichtung 8, welche eine Betriebsbremse 9 des Nutzfahrzeugs betätigt, um Betriebsbremsungen einzuleiten, sowie
- eine elektrische Stelleinrichtung 10, welche ein elektrisch steuerbares Fahrwerk 11 des Nutzfahrzeugs betätigt, um das Fahrzeugniveau einzustellen.

Die elektrischen Stelleinrichtungen 2, 4, 6, 8, 10 betreffend die Betätigung der Betriebsbremse 9, des Retarders 7 sowie der Brennkraftmaschine können Bestandteil eines elektronischen Stabilitätsprogramms (ESP) und eines Antiblockiersystems (ABS) im Rahmen eines elektronischen Bremssystems (EBS) des Nutzfahrzeugs sein, welches wiederum den Fahrzeugführungsfunktionen Fahrstabilität und Fahrdynamik zugeordnet ist. Darüber hinaus können weitere elektrische Stelleinrichtungen vorhanden sein, wie beispielsweise eine elektrische Stelleinrichtung für die Parkbremse und/oder eine elektrische Stelleinrichtung für eine Lenkeinrichtung des Nutzfahrzeugs. Die Stelleinrichtungen 2, 4, 6, 8, 10 sind im Motorraum, am Fahrzeugrahmen oder an Achsen des Nutzfahrzeugs angeordnet.

Die entsprechenden Fahrzeugführungsfunktionen beinhalten dann beispielsweise die
- Aussteuerung eines Motormomentanforderungssignals in Abhängigkeit eines Signals für die Gaspedalstellung,
- Aussteuerung von rad-und/oder achsindividuellen Bremskraftanforderungssignalen für Dauerbremse 7, Motorbremse oder Betriebsbremse 9 in Abhängigkeit eines Signals für die Bremspedalstellung;
- Aussteuerung von Schaltsignalen für das automatische Getriebe 5,
- Aussteuerung von Signalen betreffend die Fahrstabilität und Fahrdynamik,
- Aussteuerung von Signalen betreffend das elektrisch steuerbare Fahrwerk 11.

Zusätzlich kann eine solche Fahrzeugführungsfunktion in der Aussteuerung von Bremskraftanforderungssignalen für die elektrische Parkbremse in Abhängigkeit von der Stellung eines Parkbremsbetätigungsorgans und/oder in der Aussteuerung von Signalen betreffend die elektrische Lenkeinrichtung in Abhängigkeit eines Signals für die Stellung des Lenkrads 12 bestehen.

Um die Fahrzeugführungsfunktionen auszulösen bzw. zu steuern bzw. zu regeln, sind in einem Nutzfahrzeugführerhaus 14 entsprechende Betätigungselemente vorhanden, beispielsweise eine Pedalerie 16 mit einem Gaspedal und einem Bremspedal, das Lenkrad 12, ein nicht gezeigter Wählhebel für das automatische Getriebe 5 sowie Anzeigeinstrumente 18. Diese Betätigungselemente 12, 16 sind mit Sensoren versehen, welche Eingangssignale für ein einziges zentrales Fahrzeugführungssteuergerät 20 liefern, beispielsweise je ein Signal über die momentane Stellung des Gaspedals, des Bremspedals und des Gangwählhebels. Zusätzlich können dem zentralen Fahrzeugführungssteuergerät 20 fahrzeugspezifische Sensorsignale, beispielsweise ein Fahrzeuggeschwindigkeitssignal und ein Motordrehzahlsignal geliefert werden. Das zentrale Fahrzeugführungssteuergerät 20 steuert bzw. regelt sämtliche Fahrzeugführungsfunktionen in Abhängigkeit der Eingangs- oder Sensorsignale und steuert entsprechende elektrische Stellsignale für die Stelleinrichtungen 2, 4, 6, 8, 10 aus. Die Stelleinrichtungen 2, 4, 6, 8, 10 können eigene Steuergeräte mit lokaler Intelligenz aufweisen, jedoch empfangen diese die Stellsignale stets vom zentralen Fahrzeugführungssteuergerät 20.

Das zentrale Fahrzeugführungssteuergerät 20 ist vorzugsweise im Führerhaus 14 angeordnet und umfasst wenigstens einen Mikrocontroller mit einer Memory-Management-Unit (MMU) zum Zuweisen von virtuellen Speicherbereichen zu Software-Programmen, wobei jedes Software-Programm beispielsweise einer Fahrzeugführungsfunktion zugeordnet ist. Die Software-Programme können Kennfelder beinhalten, welche den Eingangs- oder Sensorsignalen Stellsignale für die Stelleinrichtungen 2, 4, 6, 8, 10 zuweisen. Gesteuert wird der Mikrocontroller mit seiner Memory-Management-Unit (MMU) durch ein Betriebssystem.

Besonders bevorzugt ist die Memory-Management-Unit (MMU) ausgebildet, um Zugriffsrechte in Bezug zu den virtuellen Speicherbereichen zu vergeben. Diese Zugriffsrechte können beispielsweise in nur lesend, lesend und schreibend, oder kein Zugriff bestehen. Fehlzugriffe werden dann von der Memory-Management-Unit erkannt, verhindert und an das Betriebssystem gemeldet werden.

### Bezugszahlenliste

- 1: Steuereinrichtung
- 2: Stelleinrichtung
- 4: Stelleinrichtung
- 5: Getriebe
- 6: Stelleinrichtung
- 7: Retarder
- 8: Stelleinrichtung
- 9: Betriebsbremse
- 10: Stelleinrichtung
- 12: Lenkrad
- 14: Führerhaus
- 16: Pedalerie
- 18: Anzeigeinstrumente
- 20: Fahrzeugführungssteuergerät

## Patentansprüche

1. Kraftfahrzeug, insbesondere Nutzfahrzeug, beinhaltend mehrere elektrisch ansteuerbare Stelleinrichtungen (2, 4, 6, 8, 10), welche zum Ausführen einer oder mehrerer Fahrzeugführungsfunktionen vorgesehen sind, wobei wenigstens einige der Fahrzeugführungsfunktionen ausführenden Stelleinrichtungen (2, 4, 6, 8, 10) von einem zentralen, wenigstens einen Mikrocontroller umfassenden Fahrzeugführungssteuergerät (20) angesteuert sind, **dadurch gekennzeichnet, dass** der Mikrocontroller mit einer Memory-Management-Unit (MMU) zum Zuweisen von virtuellen Speicherbereichen zu Software-Programmen versehen ist, wobei jedes Software-Programm einer Fahrzeugführungsfunktion zugeordnet ist.

2. Kraftfahrzeug nach Anspruch 1, **dadurch gekennzeichnet, dass** sämtliche Fahrzeugführungsfunktionen ausführenden Stelleinrichtungen (2, 4, 6, 8, 10) von dem einzigen zentralen Fahrzeugführungssteuergerät (20) angesteuert sind.

3. Kraftfahrzeug nach Anspruch 1 oder 2, **dadurch gekennzeichnet, dass** die Memory-Management-Unit (MMU) ausgebildet ist, um Zugriffsrechte in Bezug zu den virtuellen Speicherbereichen zu vergeben.

4. Kraftfahrzeug nach einem der vorhergehenden Ansprüche, **dadurch gekennzeichnet, dass** ein Software-Programm wenigstens einer Fahrzeugführungsfunktion oder eine Fahrzeugführungsfunktion wenigstens einem Software-Programm zugeordnet ist.

5. Kraftfahrzeug nach wenigstens einem der vorhergehenden Ansprüche, **dadurch gekennzeichnet, dass** die Fahrzeugführungsfunktion eine oder mehrere aus der folgenden Gruppe von Fahrzeugführungsfunktionen ist:
- Aussteuerung eines Motormomentanforderungssignals in Abhängigkeit eines Signals für die Gaspedalstellung,
- Aussteuerung von rad-und/oder achsindividuellen Bremskraftanforderungssignalen für Dauerbremse (7), Motorbremse oder Betriebsbremse (9) in Abhängigkeit eines Signals für die Bremspedalstellung;
- Aussteuerung von Schaltsignalen für ein automatisches Getriebe (5),
- Aussteuerung von Signalen betreffend die Fahrstabilität und Fahrdynamik,
- Aussteuerung von Signalen betreffend ein elektrisch steuerbares Fahrwerk (11).

6. Kraftfahrzeug nach Anspruch 5, **dadurch gekennzeichnet, dass** die Signale betreffend die Fahrstabilität und Fahrdynamik Signale für ein elektronisches Stabilitätsprogramm (ESP) und/oder Signale für ein Antiblockiersystem (ABS) eines elektronischen Bremssystems (EBS) umfasst.

7. Kraftfahrzeug nach Anspruch 5 oder 6, **dadurch gekennzeichnet, dass** eine Fahrzeugführungsfunktion die Aussteuerung von Bremskraftanforderungssignalen für die Parkbremse in Abhängigkeit von der Stellung eines Parkbremsbetätigungsorgans oder die Aussteuerung von Signalen betreffend die Lenkeinrichtung in Abhängigkeit eines Signals für die Stellung des Lenkrads (12) ist.

## Claims

1. Motor vehicle, in particular a commercial vehicle, including several electrically controllable final control means (2, 4, 6, 8, 10) which are provided for realising one or several vehicle control functions, wherein at least some of said final control means (2, 4, 6, 8, 10) performing vehicle control functions are controlled by a central vehicle controller device (20) including at least one micro controller, **characterized in that** said micro controller is provided with a memory management unit (MMU) for allocation of virtual memory areas to software programmes, with each software programme being associated with a vehicle control function.

2. Motor vehicle according to Claim 1, **characterized in that** all final control means (2, 4, 6, 8, 10) performing vehicle control functions are controlled by a single central vehicle controller device (20).

3. Motor vehicle according to Claim 1 or 2, **characterized in that** said memory management unit (MMU) is configured for granting access rights with respect to said virtual memory areas.

4. Motor vehicle according to any of the preceding Claims, **characterized in that** a software programme is associated with at least one vehicle control function or that one vehicle control function is associated with at least one software programme.

5. Motor vehicle according to at least one of the preceding Claims, **characterized in that** said vehicle control function is one or several from the following group of vehicle control functions:
- adjusting an engine momentum demanding signal as a function of a signal for the gas pedal position,
- adjusting wheel-individual and/or axle-individual brake force demanding signals for the permanent brake (7), the engine brake or the service brake (9) as a function of a signal for the brake pedal position;
- adjusting switching signals for an automatic transmission (5),
- adjusting signals relating to the driving stability and the driving dynamics,
- adjusting signals relating to an electrically controllable chassis.

6. Motor vehicle according to Claim 5, **characterized in that** the signals relating to the driving stability and the driving dynamics comprise signals for an electronic stability programme (ESP) and/or signals for an anti-blocking system (ABS) of an electronic braking system (EBS).

7. Motor vehicle according to Claim 5 or 6, **characterized in that** a vehicle control function is the adjustment of brake force demanding signals for the parking brake as a function of the position of a parking brake actuator element or the adjustment of signals relating to the steering means in response to a signal for the position of the steering wheel (12).

## Revendications

1. Véhicule automobile, en particulier un véhicule utilitaire, comprenant plusieurs moyens de réglage final à commande électrique (2, 4, 6, 8, 10) qui sont disposés pour la réalisation d'une ou plusieurs fonctions de gestion du véhicule, dans lequel au moins quelques-uns desdits moyens de réglage final à commande électrique (2, 4, 6, 8, 10), qui réalisent des fonctions de gestion du véhicule, sont commandés par un bloc de commande central de gestion du véhicule (20), qui renferme au moins une micro-unité de commande, **caractérisé en ce que** ladite micro-unité de commande est munie d'une unité de gestion de mémoire (MMU) pour l'assignation des zones virtuelles de mémorisation aux programmes du logiciel, à chaque programme du logiciel étant assigné à une fonction de gestion du véhicule.

2. Véhicule automobile selon la revendication 1, **caractérisé en ce que** tous les moyens de réglage final à commande électrique (2, 4, 6, 8, 10), qui réalisent des fonctions de gestion du véhicule, sont commandés par un seul bloc de commande central de gestion du véhicule (20).

3. Véhicule automobile selon la revendication 1 ou 2, **caractérisé en ce que** ladite unité de gestion de mémoire (MMU) est conçue de façon qu'elle attribue des autorisations d'accès relatives auxdites zones virtuelles de mémorisation.

4. Véhicule automobile selon une quelconque des revendications précédentes, **caractérisé en ce qu'**un programme du logiciel est affecté à au moins une fonction de gestion du véhicule ou **en ce qu'**une fonction de gestion du véhicule est affectée à au moins un programme du logiciel.

5. Véhicule automobile selon au moins une des revendications précédentes, **caractérisé en ce que** ladite fonction de gestion du véhicule est une fonction ou plusieurs fonctions parmi le groupe suivant de fonctions de gestion du véhicule:
- réglage d'un signal de demande de couple moteur en fonction d'un signal signalant la position de l'accélérateur,
- réglage des signaux de demande de l'effort de freinage, individuelle par roue et/ou par essieu, pour le frein permanent (7), le frein de moteur ou le frein de service (9) en fonction d'un signal signalant la position de la pédale du frein;
- réglage des signaux de changement de vitesse pour une transmission automatique (5),
- réglage des signaux relatifs à la stabilité de marche et la dynamique de marche,
- réglage des signaux relatifs à un châssis à commande électrique (11).

6. Véhicule automobile selon la revendication 5, **caractérisé en ce que** lesdits signaux relatifs à la stabilité de marche et la dynamique de marche comprennent des signaux pour un programme de stabilité électronique (ESP) et/ou des signaux pour un système de freinage antiblocage (ABS) d'un système de freinage électronique (EBS).

7. Véhicule automobile selon la revendication 5 ou 6, **caractérisé en ce qu'**une fonction de gestion du véhicule est le réglage des signaux de demande de l'effort de freinage pour l'organe actionneur du frein de stationnement ou le réglage des signaux relatifs aux moyens de direction en réponse à un signal signalant la position de du volant de direction (12).
